# EUROPEAN PATENT APPLICATION

(11) **EP 1 043 190 A2**
(43) Date of publication of application: **11.10.2000**
(21) Application number: 00302801.6
(22) Date of filing: 03.04.2000
(51) Int. Cl.: B60Q 1/26

(54) **Warning light assembly**

(30) Priority: 10.04.1999 GB 9908102
(71) Applicant: Premier Hazard Limited, Warwick Technology Park, Warwick CV34 6DE (GB)
(72) Inventor: Parkinson, Tony, Cusworth, Doncaster DN5 8UR (GB)
(74) Representative: Hollinghurst, Antony

(57) **Abstract**

A light bar is formed from three light units (10, 12, 14) each of has a reflector (70) mounted on a rotating platform 26) having a cylindrical periphery carrying both gear teeth (28) and a pulley (40) having teeth adapted to mesh with a toothed belt (48, 50). An electric motor (88) has a gear (90) on its output shaft engaging with the gear teeth (28) on the platform (26) of one of the light units. Toothed belt (48, 50) link the pulleys (40) of adjacent light units (10, 12, 14).

## Description

This invention relates a warning light assembly for a motor vehicle of the type comprising a plurality of warning light units each having a reflector mounted on a rotary platform which is journalled on a stationary vertical shaft, a light source mounted so as to produce a horizontal beam of light from the reflector and drive means for causing rotation of the reflector. Such assemblies are commonly known as light bars.

It is a requirement for the reflectors of such a light bar to rotate in synchronism with one another so that, collectively, they produce a synchronised pattern of flashing light. Accordingly, it is desirable for the reflectors to be linked to one another for simultaneous rotation.

Different vehicles and conditions of use require light bars with different numbers of warning light units. It is an object of the invention to provide a light unit constructed from standard parts which can be assembled together to provide a variety of light bars.

Accordingly the invention particularly relates to a warning light unit for a light bar of the type comprising a base having a platform with a cylindrical periphery journalled thereon for rotation about a vertical axis and gear teeth formed on the periphery thereof, a bracket mounted on the platform and a reflector on the bracket.

According to the invention, in a warning light unit of the type described above, said cylindrical periphery comprises both gear teeth and a pulley having teeth adapted to mesh with a toothed belt.

Preferably the reflector is adapted to clip on to the bracket.

To enable the reflector to be used in a non-rotary light unit, it may be provided with additional formations enabling it to be mounted in a housing by its peripheral edges and to accommodate a central bulb holder.

An embodiment of the invention will now be described, by way of example, with reference to the accompanying drawings, in which:
Figure 1 is a perspective view of a first assembly of three warning light units for use in a light bar in accordance with the invention;
Figure 2 is a side view of the assembly shown in Figure 1;
Figure 3 is a perspective view of a base for the warning light units shown in Figures 1 and 2;
Figure 4 is a perspective view a subassembly comprising the base shown in Figure 10 with a bulbholder and bulb mounted thereon and a rotary platform journalled thereon;
Figures 5, 6 and 7 are perspective views from in front, behind and below of a bracket for the warning light units shown in Figures 1 and 2;
Figures 8 and 9 are perspective views from above and below of a pulley for the warning light units shown in Figures 1 and 2;
Figures 10 and 11 are perspective views from in front and behind respectively of a reflector for the warning light units shown in Figures 1 and 2;
Figure 12 is a perspective view of the subassembly shown in Figure 4, with the addition of the pulley shown in Figures 8 and 9;
Figure 13 is a perspective view a light unit comprising the subassembly shown in Figure 12, together with the bracket shown in Figures 5, 6 and 7, and the reflector shown in Figures 10 and 11;
Figure 14 is a perspective view similar to Figure 1 of a second assembly of three warning light units for use in a light bar in accordance with the invention; and
Figure 15 is perspective view, similar to Figure 1 of a third assembly of two warning light units for use in a light bar in accordance with the invention.

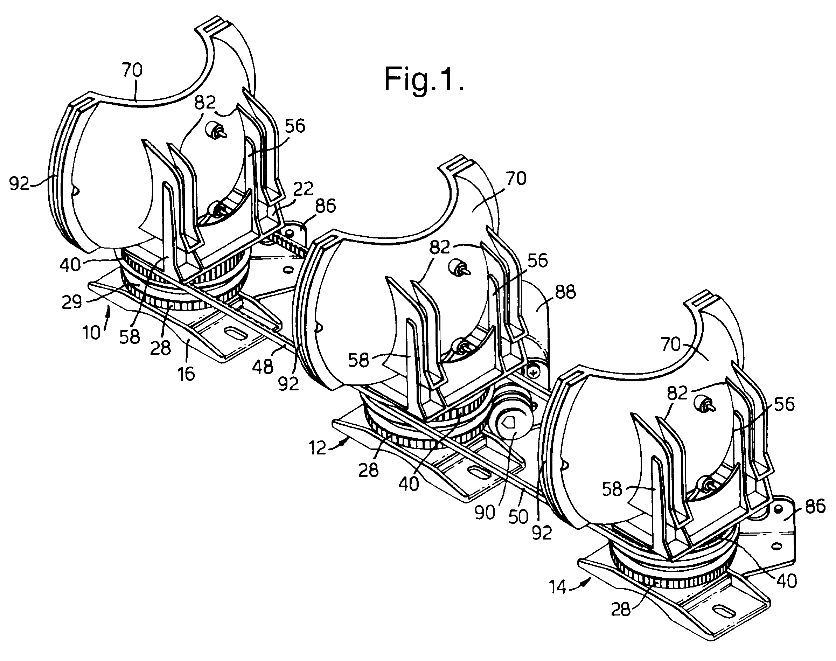

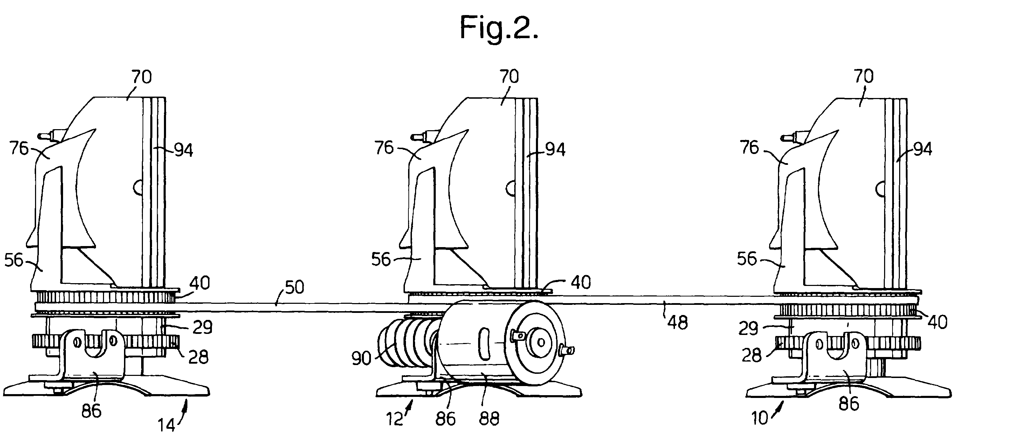

Figures 1 and 2 show three warning light units 10, 12 and 14 in line with one another. The light unit 10 will be described in detail. The other two light units 12 and 14 are identical and corresponding parts are denoted by the same reference numerals.

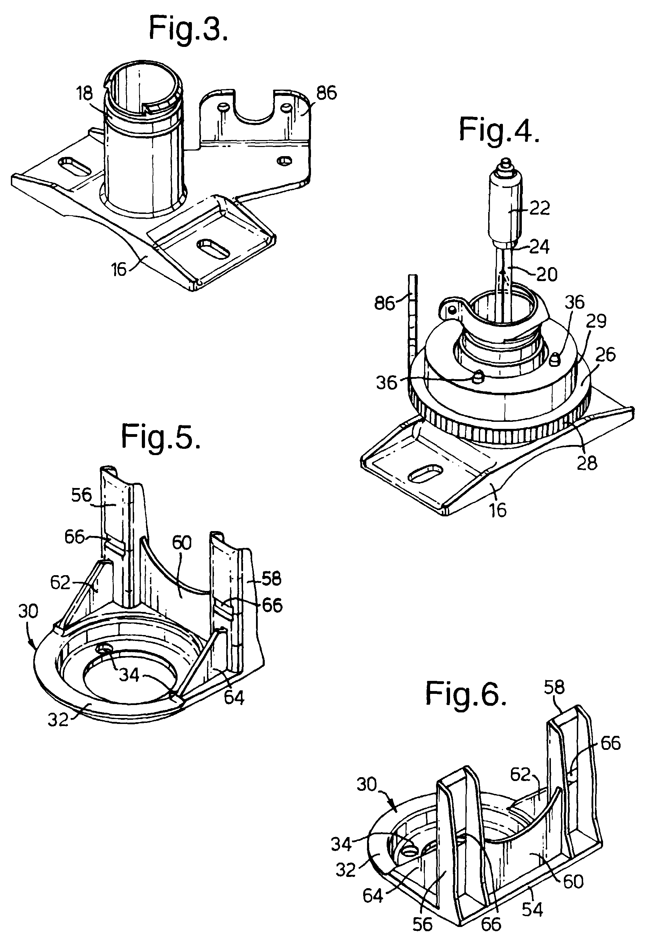

As can be seen from Figures 3 and 4, the light unit 10 comprises a base 16 having a hollow central spigot 18. A pillar 20 is secured to the base 16 so as to project upwardly through the spigot 18. A bulb 22 is mounted in a bulbholder 24 which is mounted on the upper end of the pillar 20. A rotary platform 26 is journalled on the spigot 18 for rotation about a vertical axis. The platform 26 has gear teeth 28 on its periphery 29.

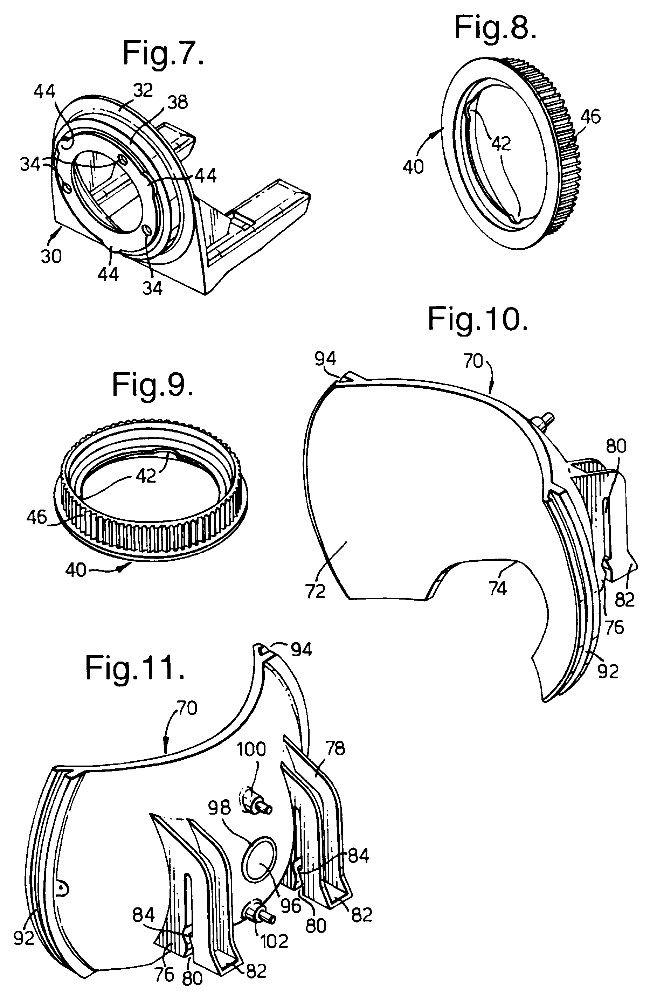

As can be seen from Figures 5, 6 and 7, a bracket 30 has an annular base portion 32 with three holes 34 to engage with studs 36 on the platform 26. The base portion 32 includes a central hub 38 which is shaped to receive a pulley 40. As shown in Figures 8 & 9, the pulley 40 has three cut-outs 42 on its inner periphery which engage with corresponding projections 44 on the hub 38 so as to prevent relative angular movement between the two parts when they are assembled together with the pulley 40 abutting against the platform 26.

The pulley 40 has drive teeth 46 on its periphery. As can be seen from Figures 1 and 2, the light units 10 and 12 are linked together by a toothed drive belt 48 which engages with the pulley 40 of each unit. The width of the drive belt 48 is half that of the teeth 46 so that the pulley 40 on the central unit 12 can also accommodate a second toothed drive belt 50 linking it with the pulley 40 of the third drive unit 14.

The base portion 32 of the bracket 30 has a straight horizontal section 54 extending tangentially to its periphery. A respective post 56, 58 extends upwardly from each end of the horizontal portion 54. A bracing web 60 extends between the two posts 56 and 58, each of which is also braced by a respective triangular web 62, 64 extending perpendicular to the web 60. Each post is of U-shaped cross-section and has a cut-out 66 about half way up.

The light unit 10 also has a reflector 70. As can be seen from Figures 10 and 11, each reflector 70 has a parabolic front reflector surface 72 with a cut-out 74 in its lower edge to accommodate the pillar 20. The reflector 60 has two attachment ribs 76 and 78 on its rear surface, each of which has a slot 80 extending upwardly from its bottom edge so as to form an outer downwardly extending resilient limb 82. When the reflector 70 is assembled on the bracket 30, the limbs 82 engage in the U-shapes of respective posts 56, 58 and projections 84 thereon snap into engagement with the cut-outs 76.

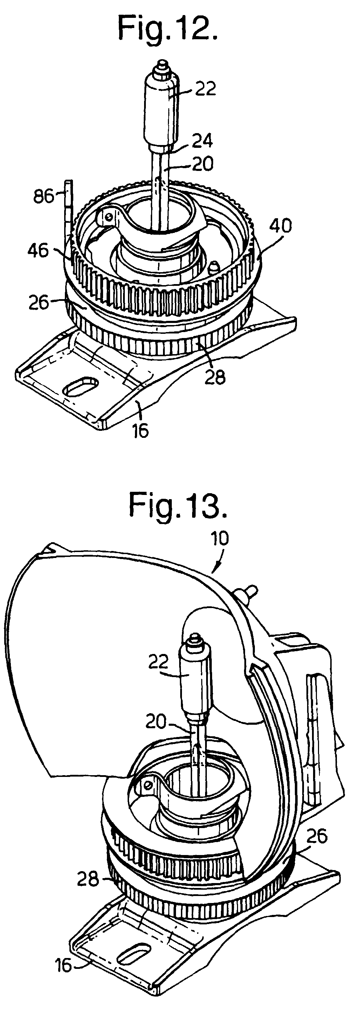

Figure 12 shows the pulley 40 positioned on the platform 26. Figure 13 shows the light unit 10 fully assembled with the bracket 30 on the platform 26 and the reflector 70 on the bracket 30.

As can be seen from Figures 1, 2 and 3, each of the bases 16 of the three light units 10, 12 and 14 has a bracket 86 on which an electric motor can be mounted. Mounted on the bracket 76 of the central light unit 12 is a motor 88 which has a worm 90 mounted on its output shaft and positioned in driving engagement with the gear teeth 28 on with the rotary platform 26. There are no motors on the brackets 76 of the other two light units 10 and 14 which are driven from the motor 78 via the drive belts 38 and 40.

Reverting to Figures 10 and 11, in order to permit the reflector 60 to be used in a non-rotary lamp assembly, grooves 92 and 94 in its lateral peripheral edges. These grooves 92 and 94 can engage with complementary formations on a housing (not shown to enable the reflector to be mounted therein. A central circular zone 96, which is connected to the rest of the reflector 60 by a relatively thin annulus 98, can be knocked out to allow a bulb (not shown) to be mounted therethrough. Two attachment projections 100 and 102, which are formed on the rear surface reflector 60, one on each side of the central circular zone 80, can serve as mounting points for a bulb holder (not shown) for such a bulb.

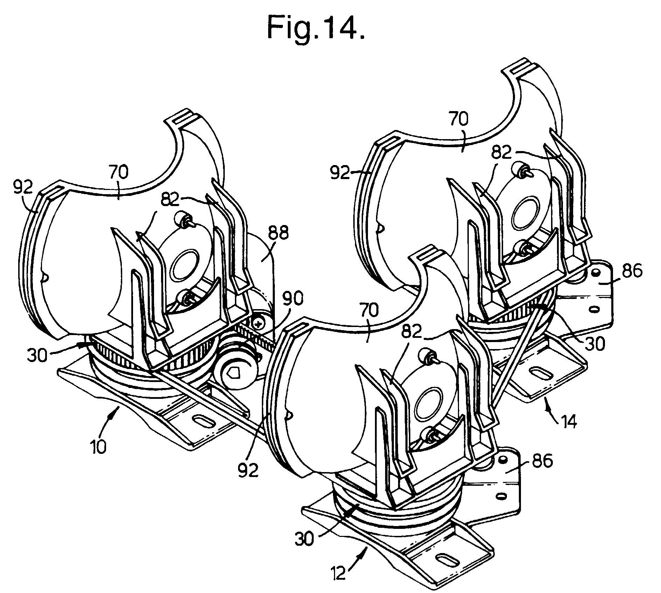

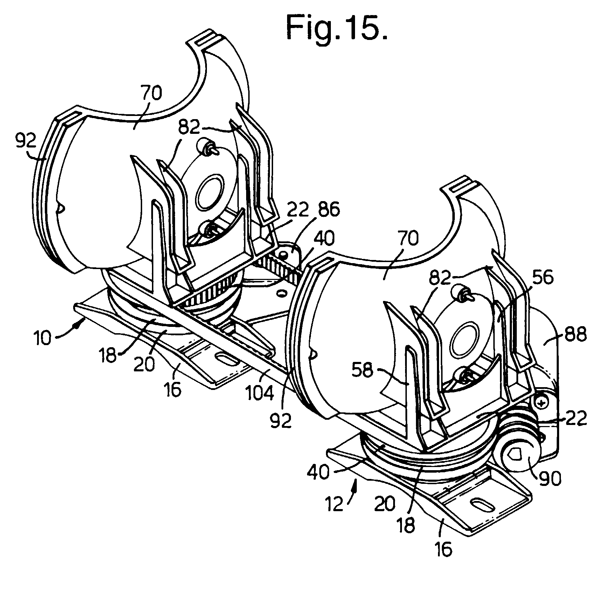

Figure 14 shows a second embodiment of the invention, in which the three warning light units 10, 12 and 14 are mounted at the corners of an equilateral triangle and the motor 88 is fitted to the unit 10 instead of to the unit 12. Figure 15 shows a third embodiment of the invention, having only two warning light units 10 and 12, linked by a drive belt 104 which is twice the width of the drive belts 38 and 40 so as to occupy the full width of the pulleys 40.

One light unit of the type described above may serve as a single beacon. The pulley 40 can be omitted without affecting the function of the other parts.

## Claims

1. A warning light unit for a light bar comprises a base (16) having a platform (26) with a cylindrical periphery journalled thereon for rotation about a vertical axis and gear teeth (28) formed on the periphery thereof, a bracket (30) mounted on the platform (26) and a reflector (70) on the bracket, characterised in that said cylindrical periphery (29) comprises both gear teeth (28) and a pulley (40) having teeth adapted to mesh with a toothed belt (48, 50).

2. A light unit according to claim 1, wherein the pulley (40) comprises a ring (40) adapted to be mounted on a hub (38) of the platform (26).

3. A light unit according to claim 1 or 2, wherein the reflector (70) is adapted to clip on to the bracket.

4. A light unit according to claim 3, wherein the bracket has an upwardly extending post (56, 58) and the reflector (60) has a rib (76, 78) on its rear surface with a slot (80) extending upwardly from its bottom edge for receiving the post (56, 58).

5. A light unit according to claim 4, wherein the portion of the rib (76, 78) to the rear of the slot (80) comprises a resilient limb (82) having a projection (84) adapted to engage in a cut-out (76) in the post (56, 58).

6. A light bar formed from a plurality of light units (10, 12, 14) according to any preceding claim, an electric motor (88) having a gear (90) on its output shaft engaging with the gear teeth (28) on the platform (26) of one of the light units and at least one toothed belt (48, 50) linking the pulleys (40) of adjacent light units (10, 12, 14).
